# EUROPÄISCHE PATENTSCHRIFT

(11) **EP 3 645 611 B1**
(45) Veröffentlichungstag und Bekanntmachung des Hinweises auf die Patenterteilung: **31.07.2024**
(21) Anmeldenummer: 18731818.3
(22) Anmeldetag: 14.06.2018
(51) Int. Cl.: C08J 5/12, C08J 7/12

(54) **MODIFIZIERTE KUNSTSTOFF-OBERFLÄCHEN MIT PERFLUORPOLYMEREN UND VERFAHREN ZU IHRER HERSTELLUNG**
MODIFIED PLASTIC SURFACES WITH PERFLUOROPOLYMERS AND METHOD FOR PRODUCING SAME
SURFACES PLASTIQUES MODIFIÉES COMPORTANT DES POLYMÈRES PERFLUORÉS, ET PROCÉDÉ POUR LEUR FABRICATION

(30) Priorität: 23.06.2017 DE 102017210656
(43) Veröffentlichungstag der Anmeldung: 06.05.2020
(73) Patentinhaber: Leibniz-Institut für Polymerforschung Dresden e.V., 01069 Dresden (DE)
(72) Erfinder: LEHMANN, Dieter, 01640 Coswig (DE)
(74) Vertreter: Rauschenbach, Marion
(86) Internationale Anmeldenummer: PCT/EP2018/065806
(87) Internationale Veröffentlichungsnummer: WO 2018/234149

(56) Entgegenhaltungen:
- WO-A1-2005/042599
- WO-A1-2016/091936
- ZHUBO LIU ET AL: "Growth feature of PTFE coatings on rubber substrate by low-energy electron beam dispersion : Growth Feature of PTFE Coatings on Rubber", POLYMERS FOR ADVANCED TECHNOLOGIES., vol. 27, no. 6, 11 November 2015 (2015-11-11), GB, pages 823 - 829, XP055501510, ISSN: 1042-7147, DOI: 10.1002/pat.3723

## Beschreibung

Die Erfindung bezieht sich auf das Gebiet der Chemie und betrifft mit Perfluorpolymeren modifizierte Kunststoffe, die für einen Einsatz unter tribologischen Bedingungen verbesserte Montageeigenschaften und/oder Gleitreibungseigenschaften sowie einen verringerten Verschleiß aufweisen und insbesondere im Maschinenbau allgemein und auf den speziellen Gebieten der Dichtungstechnik/dynamische Dichtsysteme sowie der KFZ-Technik eingesetzt werden können, sowie ein Verfahren zur Herstellung einer solchen Modifizierung.

Als Kunststoffe bezeichnet man Werkstoffe, die hauptsächlich aus Makromolekülen bestehen (Wikipedia, Stichwort Kunststoffe).

Ein Polymer ist ein chemischer Stoff, der aus Makromolekülen besteht (Wikipedia, Stichwort Polymer).

Bekannt ist, dass Perfluoralkylpolymere, wie beispielsweise PTFE und/oder PFA, unter Einwirkung hochenergetischer/energiereicher Strahlen wie Elektronenstrahlen und/oder Gamma-Strahlen strahlenchemisch abgebaut werden [K. Lunkwitz et al., Journal of Fluorine Chemistry 125 (2004) 863-873].

"Bei Bestrahlung von PTFE in Gegenwart von Sauerstoff werden aus den zunächst entstehenden Perfluoralkylradikalen Peroxy- und Alkoxyradikale gebildet...

Über die Zwischenstufe der Bildung des Alkoxyradikals wird das endständige Perfluoralkylradikal unter Kettenverkürzung und Bildung von Carbonyldifluorid schrittweise abgebaut...

Dagegen entstehen aus den seitenständigen Alkoxyradikalen Perfluoralkansäurefluoride und endständige Perfluoralkylradikale...

Ungesinterte und unverpreßte PTFE-Emulsions- und -Suspensionspolymerisate sind von faserig-filzigem Charakter. Eine Übertragung z. B. der antiadhäsiven und Gleiteigenschaften des PTFE auf andere Medien durch Einarbeitung in wäßrige oder organische Dispersionen, Polymere, Farben, Lacke, Harze oder Schmierstoffe ist nicht möglich, weil dieses PTFE sich nicht homogenisieren läßt, sondern zur Klumpenbildung neigt, agglomeriert, aufschwimmt oder sich absetzt.

Durch die Einwirkung energiereicher Strahlung mit einer Energiedosis von etwa 100 kGy wird aus den faserig-filzigen Polymerisaten infolge partiellen Abbaus der Polymerketten ein rieselfähiges Feinpulver erhalten. Dieses Pulver enthält noch lockere Agglomerate, die leicht zu Primärteilchen mit < 5 µm Partikeldurchmesser zerteilt werden können. Bei Bestrahlung in Gegenwart von Reaktanten werden funktionelle Gruppen in das Polymere eingebaut. Erfolgt die Bestrahlung in Luft, so werden... (und anschließender Hydrolyse der -COF-Gruppen durch Luftfeuchtigkeit) Carboxylgruppen erhalten.... Die positiven Eigenschaften des PTFE, wie die exzellenten Gleit-, Trenn- und Trockenschmiereigenschaften sowie die hohe chemische und thermische Stabilität, bleiben erhalten..." [A. Heger et al., Technologie der Strahlenchemie an Polymeren, Akademie-Verlag Berlin 1990].

Nachteilig bei derartigen Bestrahlungen von Perfluoralkylpolymeren wirkt sich vielfach die Unverträglichkeit mit anderen Materialien aus.

Auch durch eine chemische Aktivierung von PTFE durch die bekannten Verfahren mit (1.) Natriumamid in flüssigem Ammoniak und (2.) Alkalialkyl- und Alkali-Aromaten-Verbindungen in aprotischen inerten Lösungsmitteln ist eine Modifizierung des PTFE zu erreichen. Über diese Modifizierungen können verbesserte Grenzflächenwechselwirkungen erreicht werden.

Die Verwertung der Produkte des PTFE-Abbaus nach einer Bestrahlung erfolgt in vielfältigen Einsatzgebieten - so auch als Additiv zu Kunststoffen zum Zwecke der Erzielung von Gleit- oder Antihafteigenschaften. Die Feinpulversubstanzen liegen mehr oder minder fein dispergiert als Füllstoffkomponente in einer Matrix vor [Ferse et al., Plaste u. Kautschuk, 29 (1982), 458; DD 146 716].

Durch den Einsatz von PTFE-Feinpulver wird eine Verbesserung der Eigenschaften im Vergleich zu den kommerziellen fluorcarbonfreien Additiven erreicht.

Bekannt sind nach US 5,576,106 B1 gepfropfte fluorhaltige Kunststoffe, die aus fluorhaltigen Kunststoffpartikeln bestehen, wie ETFE, das nicht zu den Perfluorpolymeren gehört, an deren Oberfläche eine nichthomopolymerisierte ethylenisch ungesättigte Verbindung angepfropft ist. Dabei können die nichthomopolymerisierten ethylenisch ungesättigten Verbindungen Säuren, Ester oder Anhydride sein.

Bekannt ist auch aus DE 103 51 812 A1, DE 103 51 813 A1, DE 103 51 814 A1, DE 10 2004 016 873 A1, DE 10 2004 016 876 A1, DE 10 2006 041 511 A1, DE 10 2007 055 927 A1, DE 10 2011 083 076 A1, DE 10 2013 216 649 A1, DE 10 2013 216 650 A1, DE 10 2013 216 651 A1, DE 10 2013 216 652 A1, DE 10 2014 225 670 A1 und DE 10 2014 225 671 A1 eine radikalische Kopplung/Pfropfung mit ethylenisch/olefinisch ungesättigten Monomeren und/oder Niedermolekularen wie beispielsweise ungesättigten Öl(en) und/oder Makromeren und/oder Oligomeren und/oder Polymeren durch eine reaktive Umsetzung mit den Perfluoralkyl-(peroxy- )radikalen von Perfluorpolymeren, wie beispielsweise PTFE, die aus einer strahlenchemischen und/oder plasmachemischen Modifizierung und/oder aus dem Polymerisationsprozess stammen. Die reaktiven Umsetzungen wurden entweder in Lösung, in Dispersion, in Schmelze, in Pastenform oder in einer Feststoffextrusion durchgeführt.

Weiterhin ist als Verfahren zur Oberflächenmodifizierung von Substraten die PlasmaPolymerisation bekannt, bei dem beispielsweise auch Perfluorschichten direkt auf der Substratoberfläche erzeugt werden.

"Plasmapolymerisation ist eine spezielle plasmaaktivierte Variante der chemischen Gasphasenabscheidung (PE-CVD).

Bei der Plasmapolymerisation werden dampfförmige organische Vorläuferverbindungen (Precursor-Monomere) in der Prozesskammer durch ein Plasma zunächst aktiviert. Durch die Aktivierung entstehen ionisierte Moleküle und es bilden sich bereits in der Gasphase erste Molekülfragmente in Form von Clustern oder Ketten. Die anschließende Kondensation dieser Fragmente auf der Substratoberfläche bewirkt dann unter Einwirkung von Substrattemperatur, Elektronen- und lonenbeschuss die Polymerisation und somit die Bildung einer geschlossenen Schicht.

Die Struktur der entstehenden "Plasmapolymere" ist vergleichbar mit stark vernetzten Duroplasten, denn sie bilden ein weitgehend statistisches kovalentes Netzwerk. Die Abscheidung von kettenförmigen Polymeren in ein- oder polykristalliner Form ist daher durch Plasmapolymerisation nicht möglich." [wikipedia.org/wiki/Plasmapolymerisation].

Weiterhin ist ein Verfahren zur Tribomodifizierung von Elastomeren durch aktivierte Halogenierung (Strahlenbromierung) [DD 145 757, DD 0154 102, DD 248 132 A1] bekannt. Durch die Bromierung und die anschließende Strahlenbehandlung werden verbesserte Gleitreibungseigenschaften erreicht [A. Heger et al., "Technologie der Strahlenchemie von Polymeren", 1. Auflage, Carl Hanser Verlag, München, Wien, 1990, S. 207-252; J. Klose et al., "Oberflächenmodifizierung von Elastomeren mit dem Verfahren der aktivierten Halogenierung", Dichtungstechnik, Jahrbuch 2014, S. 268-282, Isgatec GmbH Mannheim, ISBN: 978-3-9811509-7-1].

Zur "Vermeidung von Stick-Slip-Reibinstabilitäten beschichteter Elastomere auf mikroskopisch rauen und glatten Oberflächen" liegt ein Bericht der Forschungsvereinigung "Verein zur Förderung des Forschungsinstitutes für Leder und Kunststoffbahnen (FILK) Freiberg/Sachsen e.V." (BMWi: IGF 15810 BG Datum der Veröffentlichung: 31.12.2010) vor. Es wurden die rußverstärkten Elastomere SBR und EPDM, die unterschiedliche Glasübergangstemperaturen, Vernetzungsgrade oder Oberflächenrauheiten aufweisen, mit vier unterschiedlichen (Gleit-)Lacksystemen (Zweikomponenten Polyurethanlack (PU), Thermoplastischer Polyurethanlack (TPU), PU-Lacke mit Partikeln aus Polytetrafluorethylen (PTFE) oder Polysiloxan) behandelt. Die beschichteten Elastomere wurden auf ihre Reibeigenschaften gegen Modelloberflächen aus Stahl, Autoglas und lackiertem Blech getestet. Eine reaktive Oberflächenmodifizierung zur Vermeidung von Stick-Slip-Reibinstabilitäten wurde nicht beschrieben.

Bekannt ist aus DE 100 42 566 A1 ein Verfahren zur Modifizierung von Kunststoffoberflächen, bei dem während oder unmittelbar nach oder nach einem Formgebungsprozess und bei dem die Temperatur der Kunststoffoberfläche mindestens die onset-Temperatur des Reaktionspeaks in der DSC-Kurve ist, eine oder mehrere Modifikatorsubstanz(en) ganz oder teilweise mit der Oberfläche der geformten Kunststoffe in Kontakt gebracht wird, wobei als Modifikatorsubstanz(en) solche Stoffe eingesetzt werden, die mit der Oberfläche des geformten Kunststoffes eine Reaktion eingehen und/oder durch Interdiffusion in die Oberfläche eindringen und/oder auf der Oberfläche aufschmelzen.

Dabei wurden als Kunststoffe Polyamid, Polyester, Polycarbonat, TPU und PVC oberflächenmodifiziert, wobei als Reaktionen zur Modifizierung nur die Umsetzung von funktionellen Gruppen in Substitutionsreaktionen angeführt wurden, wozu auch die Reaktionen von Carbonylverbindungen gehören. Ferner werden in den Beispielen nur Oberflächenmodifizierungen während des Spritzgießens beschrieben als Basis für das Verfahren "Grenzflächenreaktives Spritzgießen".

In einem speziellen Verfahren der DE 100 42 566 A1 erfolgt die Passivierung von Oberflächen zur "Herstellung beweglicher Teile aus gleichen Materialien... Nach Herstellung eines Kunststoffvorspritzlings mit einer Modifizierung der Oberfläche zur Passivierung mittels Modifikatorsubstanzen, die aus Verbindungen mit mindestens einer reaktiven Gruppe bestehen, wobei vorzugsweise perfluorierte und/oder fluorhaltige und/oder siliconhaltige und/oder paraffinische, niedermolekulare und/oder oligomere und/oder polymere Verbindungen oder Gemischen davon mit mindestens einer Funktionalität zum Einsatz kommen, können eine oder mehrere weitere Komponenten an-, auf- oder eingespritzt werden. Die Funktionalität dient zur direkten Kopplung eines Teiles der Modifikatorsubstanz an der Oberfläche unter Modifizierung und/oder einer Reaktion mit sich selbst zu dünnen verzweigten und/oder vernetzten Filmen, die noch über chemische Kopplung der Restfunktionalitäten mit dem Polymer der Schmelzeoberfläche reagieren und diese modifizieren.... Zur ausreichenden Trennung in der Grenzfläche zwischen den Komponenten zur Herstellung von beweglichen Teilen im Montagespritzgießen....". Eingesetzt wird hierzu in Beispiel 15 zur Oberflächenmodifizierung/Passivierung von PA6 im Spritzgießprozess das Perfluorheptansäureanhydrid.

"Unter Passivierung versteht man in der Oberflächentechnik die spontane Entstehung oder gezielte Erzeugung einer Schutzschicht auf einem metallischen Werkstoff, welche die Korrosion des Grundwerkstoffes verhindert oder stark verlangsamt." [https:/Ide.wikipedia.org/wiki/Passivierung].

Von Z. Liu et al: Polym. Adv. Technol. 2016, 27 823 - 829 sind Untersuchungen zum Wachstum von PTFE-Beschichtungen auf Gummisubstraten mittels Niedrig-Energie-Elektronenbestrahlung bekannt. Die Ergebnisse zeigten, dass die Beschaffenheit des Substrats die Form und Größenverteilung der Oberflächenkonglomerate von PTFE-Beschichtungen aufgrund des Wechselwirkungsprozesses der aktiven Dispersionsteilchen mit der darunter liegenden Polymerschicht beeinflusst.

Nachteilig bei den bekannten Lösungen des Standes der Technik sind die für Kunststoff-Oberflächen, die für einen Einsatz unter tribologischen Bedingungen vorgesehen sind, noch nicht ausreichend guten Montageeigenschaften und/oder Gleitreibungseigenschaften sowie der noch zu hohe Verschleiß.

Die Aufgabe der vorliegenden Erfindung besteht in der Angabe von mit Perfluorpolymeren modifizierten Kunststoffen, wodurch Oberflächen von Formteilen und/oder Bauteilen aus Kunststoffen, die für einen Einsatz unter tribologischen Bedingungen vorgesehen sind, deutlich verbesserte Montageeigenschaften und/oder Gleitreibungseigenschaften aufweisen sowie einen sehr geringen Verschleiß. Die Aufgabe der vorliegenden Erfindung besteht weiterhin in der Angabe eines einfachen und kostengünstigen Verfahrens zur Herstellung von mit Perfluorpolymeren modifizierten Oberflächen von Formteilen und/oder Bauteilen aus Kunststoffen.

Die Aufgaben werden durch die in den Ansprüchen angegebene Erfindung gelöst. Vorteilhafte Ausgestaltungen sind Gegenstand der Unteransprüche.

Bei den erfindungsgemäßen mit Perfluorpolymeren modifizierten Kunststoffen liegen die an der Oberfläche von Formteilen und/oder Bauteilen aus Kunststoffen befindlichen olefinisch ungesättigten Doppelbindungen mit Perfluorpolymer-(peroxy- )radikalen von modifizierten Perfluorpolymer-(Mikro-)Pulvern, nach einer reaktiven Umsetzung unter mechanischer Beanspruchung bei Raumtemperatur über radikalische Kopplung chemisch kovalent gebunden vor, wobei die jeweilige Oberfläche der Kunststoffe vollständig mit Perfluorpolymer-(Mikro-)Pulver bedeckt ist.

Vorteilhafterweise sind als Kunststoffe der Form- und/oder Bauteile Polymere mit Gruppen mit olefinisch ungesättigten Doppelbindungen in der Seitenkette und/oder in der Hauptkette an der Oberfläche vorhanden.

Weiterhin vorteilhafterweise sind als Polymere mit olefinisch ungesättigten Doppelbindungen Elastomere/Gummi oder Kautschuk vor der Vulkanisation oder thermoplastische Elastomere oder Thermoplaste oder Duromere, jeweils an der Oberfläche, vorhanden.

Ebenfalls vorteilhafterweise sind als Polymere SBR, NBR, HNBR, XNBR, EPDM, BR, IR, NR, SBS, SEBS, SEPS, SEEPS, MBS und Mischungen daraus, ABS sowie Blends aus ABS mit PA oder ABS und PC, BMC (Bulk-Molding-Compound) oder SMC (Sheet-Molding-Compound) auf UP(ungesättigtes Polyester)-Harz- oder Vinylester-Harz-Basis als Prepreg und/oder ausgehärtetes Material, das noch olefinisch ungesättigte Doppelbindungen an der Oberfläche besitzt, oder auf Epoxidharz-Basis als Prepreg und/oder ausgehärtetes Material, wobei die Oberfläche nachträglich modifiziert Gruppen mit olefinisch ungesättigten Doppelbindungen besitzt, vorhanden.

Und auch vorteilhafterweise sind modifizierte Perfluorpolymer-(Mikro-)Pulver vorhanden, die mittels strahlenchemischer und/oder plasmachemischer Behandlung modifiziert sind.

Vorteilhaft ist es auch, wenn als modifizierte Perfluorpolymer-(Mikro-)Pulver modifiziertes PTFE und/oder PFA und/oder FEP, vorteilhafterweise mittels strahlenchemischer und/oder plasmachemischer Behandlung modifiziertes PTFE und/oder PFA und/oder FEP vorhanden sind.

Bei dem erfindungsgemäßen Verfahren zur Herstellung von mit Perfluorpolymer-(Mikro-)Pulvern modifizierten Oberflächen von Formteilen und/oder Bauteilen aus Kunststoffen werden modifizierte Perfluorpolymer-(Mikro-)Pulver mit einer Perfluorpolymer-(peroxy-)Radikal-Konzentration von > 5 ·10¹⁶ Spin/g_{Perfluorpolymer} auf eine feste Oberfläche von Kunststoffen, die olefinisch ungesättigte Doppelbindungen mindestens an der Oberfläche aufweisen, bei Raumtemperatur die Oberfläche vollständig bedeckend aufgebracht und während und/oder nach dem Aufbringen der modifizierten Perfluorpolymer-(Mikro-)Pulver wird unter mechanischer Beanspruchung eine reaktive Umsetzung durchgeführt, wobei eine nachfolgende Temperung der Kunststoffe mit den modifizierten Perfluorpolymer-(Mikro-)Pulvern ausgeschlossen ist.

Vorteilhafterweise wird als modifizierte Perfluorpolymer-(Mikro-)Pulver modifiziertes PTFE- und/oder PFA- und/oder FEP-(Mikro-)Pulver, vorteilhafterweise mittels strahlenchemischer und/oder plasmachemischer Behandlung modifiziertes PTFE- und/oder PFA- und/oder FEP-(Mikro-)Pulver, eingesetzt.

Ebenfalls vorteilhafterweise werden strahlenchemisch modifizierte Perfluorpolymer-(Mikro-)Pulver eingesetzt, welche mit einer Strahlendosis von > 50 kGy und vorzugsweise ≥ 100 kGy modifiziert sind und eine Konzentration > 10¹⁸ Spin/g_{Perfluorpolymer} an Perfluorpolymer-(peroxy-)Radikalen aufweisen.

Weiterhin vorteilhafterweise werden modifizierte Perfluorpolymer-(Mikro-)Pulver eingesetzt, die in Gegenwart von Reaktanten und vorzugsweise unter Sauerstoffeinfluss strahlenchemisch modifiziert sind.

Und auch vorteilhafterweise werden als Kunststoffe Form- und/oder Bauteile aus Polymeren mit Gruppen mit olefinisch ungesättigten Doppelbindungen in der Seitenkette und/oder in der Hauptkette mindestens an der Oberfläche eingesetzt und modifiziert.

Vorteilhaft ist es auch, wenn als Polymere mit olefinisch ungesättigten Doppelbindungen Elastomere/Gummi oder Kautschuk vor der Vulkanisation oder thermoplastische Elastomere oder Thermoplaste oder Duromere, jeweils an der Oberfläche, eingesetzt werden.

Weiterhin vorteilhaft ist es, wenn als Polymere SBR, NBR, HNBR, XNBR, EPDM, BR, IR, NR, SBS, SEBS, SEPS, SEEPS, MBS und Mischungen daraus, ABS sowie Blends aus ABS mit PA oder ABS und PC, BMC (Bulk-Molding-Compound) oder SMC (Sheet-Molding-Compound) auf UP(ungesättigtes Polyester)-Harz- oder Vinylester-Harz-Basis als Prepreg und/oder ausgehärtetes Material, das noch olefinisch ungesättigte Doppelbindungen an der Oberfläche besitzt, oder auf Epoxidharz-Basis als Prepreg und/oder ausgehärtetes Material, wobei die Oberfläche nachträglich modifiziert Gruppen mit olefinisch ungesättigten Doppelbindungen besitzt, eingesetzt werden.

Ebenfalls vorteilhaft ist es, wenn bei Raumtemperatur, vorzugsweise bei 18 bis 25 °C die modifizierten Perfluorpolymer-(Mikro-)Pulver auf die Kunststoffoberfläche aufgebracht werden.

Und auch vorteilhaft ist es, wenn modifizierte Perfluorpolymer-(Mikro-)Pulver auf eine feste Kunststoff-Oberfläche, die eine Temperatur bis 200 °C, vorzugsweise 150 °C aufweist, aufgebracht werden.

Von Vorteil ist es auch, wenn die reaktive Umsetzung unter mechanischer Beanspruchung
- durch Druckbeanspruchung, wie Reiben und/oder Bürsten und/oder Ultraschall ohne oder mit Trägerkörpern aus Metall und/oder Keramik und/oder Kunststoff und/oder
- durch Beanspruchung durch beschleunigte Trägerkörper aus Metall und/oder Keramik und/oder Kunststoff,
realisiert wird,
wobei die mechanische Beanspruchung während und/oder nach dem Aufbringen der strahlenchemisch und/oder plasmachemisch modifizierten Perfluorpolymer-(Mikro- )Pulver auf die feste Kunststoff-Oberfläche realisiert wird.

Und auch von Vorteil ist es, wenn das Aufbringen der modifizierten Perfluorpolymer-(Mikro-)Pulver vor der reaktiven Umsetzung unter mechanischen Beanspruchung realisiert und das modifizierte Perfluorpolymer-(Mikro-)Pulver durch elektrostatische Adsorption auf der festen Kunststoff-Oberfläche positioniert wird.

Mit der vorliegenden Erfindung wird es erstmals möglich mit Perfluorpolymeren modifizierte Kunststoffe anzugeben, wodurch Oberflächen von Formteilen und/oder Bauteilen aus Kunststoffen, die für einen Einsatz unter tribologischen Bedingungen vorgesehen sind, deutlich verbesserte Montageeigenschaften und/oder Gleitreibungseigenschaften aufweisen sowie einen sehr geringen Verschleiß. Ebenso wird es erstmals möglich, solche mit Perfluorpolymeren modifizierten Oberflächen von Formteilen und/oder Bauteilen aus Kunststoffen mit einem einfachen und kostengünstigen Verfahren herzustellen.

Erreicht wird dies durch mit Perfluorpolymeren modifizierte Kunststoffe, bei denen die an der Oberfläche von Formteilen und/oder Bauteilen aus Kunststoffen befindlichen olefinisch ungesättigten Doppelbindungen mit Perfluorpolymer-(peroxy- )Radikalen von Perfluorpolymer-(Mikro-)Pulvern, nach einer reaktiven Umsetzung unter mechanischer Beanspruchung bei Raumtemperatur über radikalische Kopplung chemisch kovalent gebunden vorliegen.

Als olefinisch ungesättigte Doppelbindungen sollen im Rahmen der Erfindung sowohl olefinische Doppelbindungen als auch ethylenisch ungesättigte Doppelbindungen oder ethylenische Doppelbindungen, die in ungesättigten Verbindungen vorhanden sind, verstanden werden.

Unter Perfluorpolymer-(peroxy-)Radikalen sollen im Rahmen dieser Erfindung alle Radikale von Perfluorpolymeren, insbesondere auch Perfluoralkyl-(peroxy-)Radikale, verstanden werden, die entweder während der Herstellung der Perfluorpolymere entstanden sind und/oder während einer nachträglichen Modifizierung, wie beispielsweise einer strahlenchemischen und/oder plasmachemischen Modifizierung.

Mit der erfindungsgemäßen Lösung werden modifizierte Perfluorpolymer-(Mikro- )Pulver, die Perfluorpolymer-(peroxy-)Radikale besitzen, mit Kunststoff-Oberflächen, die olefinisch ungesättigte Doppelbindungen mindestens an der Oberfläche aufweisen, chemisch kovalent gekoppelt, wodurch die Kunststoff-Oberflächen, die für einen Einsatz unter tribologischen Bedingungen vorgesehen sind, deutlich verbesserte tribologische Eigenschaften aufweisen.

Als Kunststoffe sind vorteilhafterweise Form- und/oder Bauteile aus Polymeren mit Gruppen mit olefinisch ungesättigten Doppelbindungen in der Seitenkette und/oder in der Hauptkette vorhanden, wobei die Polymere mit olefinisch ungesättigten Doppelbindungen an der Oberfläche vorteilhafterweise Elastomere/Gummi oder Kautschuk vor der Vulkanisation oder thermoplastische Elastomere oder Thermoplaste oder Duromere, jeweils an der Oberfläche, sein können, wie SBR, NBR, HNBR, XNBR, EPDM, BR, IR, NR, SBS, SEBS, SEPS, SEEPS, MBS und Mischungen daraus, ABS sowie Blends aus ABS mit PA oder ABS und PC, BMC (Bulk-Molding-Compound) oder SMC (Sheet-Molding-Compound) auf UP(ungesättigtes Polyester)-Harz- oder Vinylester-Harz-Basis als Prepreg und/oder ausgehärtetes Material, das noch olefinisch ungesättigte Doppelbindungen an der Oberfläche besitzt.

Als modifizierte Perfluorpolymer-(Mikro-)Pulver sind vorteilhafterweise modifiziertes PTFE und/oder PFA und/oder FEP vorhanden.

Als modifizierte Perfluorpolymer-(Mikro-)Pulver sollen im Rahmen der Erfindung Perfluorpolymer-(Mikro-)Pulver verstanden werden, die als Ausgangsstoffe für das erfindungsgemäße Verfahren mindestens Perfluorpolymer-(peroxy-)Radikale, die aus dem Herstellungsprozess stammen und/oder in einer strahlenchemischen Modifizierung generiert wurden, aufweisen, wobei nach einer reaktiven Umsetzung die modifizierten Perfluorpolymer-(Mikro-)Pulver durch Reaktion der Radikale mit den olefinisch ungesättigten Doppelbindungen auf der Oberfläche von Formteilen und/oder Bauteilen aus Kunststoffen dann chemisch kovalent gebunden vorliegen.

Dabei können die Perfluorpolymer-(peroxy-)Radikale beispielsweise während der Polymerisation der Perfluorpolymer-(Mikro-)Pulver und/oder vorzugsweise durch strahlenchemische und/oder plasmachemische Behandlung erzeugt worden sein.

Vorteilhafterweise sind Perfluorpolymer-(Mikro-)Pulver vorhanden, die mittels strahlenchemischer und/oder plasmachemischer Behandlung modifiziert worden sind.

Die radikalische Kopplung erfolgt zwischen den olefinisch ungesättigten Doppelbindungen der Kunststoffe, die an der Oberfläche vorhanden sind, mit Perfluorpolymer-(peroxy-)Radikalen der Perfluorpolymer-(Mikro-)Pulver, so dass die Perfluorpolymer-(Mikro-)Pulver chemisch kovalent an die Kunststoffoberfläche gebunden sind.

Dabei soll die Oberfläche der Kunststoffe lokal abgegrenzt und/oder mindestens teilweise, vorzugsweise im Wesentlichen vollständig oder vollständig mit Perfluorpolymer-(Mikro-)Pulver bedeckt sein.

Als Perfluorpolymer-(Mikro-)Pulver liegen Pulver mit Partikelgrößen im Bereich von 60 - 80 nm (untere Primärpartikelgröße von speziellen PTFE-Emulsionspolymeren) bis 500 µm (Agglomerate, agglomerierte Perfluorpolymerpartikel), vorzugsweise im Bereich von 200 nm bis 5 µm vor.

Mit den erfindungsgemäß modifizierten Oberflächen von Formteilen und/oder Bauteilen aus Kunststoffen liegen Kunststoff-Formteile und/oder -bauteile vor, bei denen durch die unter mechanischer Beanspruchung aufgebrachten und kovalent gekoppelten Perfluorpolymer-(Mikro-)Pulver ein Perfluorpolymerfestschmierstoff auf der Kunststoff-Formteil- und/oder -bauteil-Oberfläche vorliegt, der dort chemisch gekoppelt und fixiert ist.

Damit sind bei tribologischen Anwendungen der Kunststoff-Formteile und/oder -bauteile deutlich verbesserte Montageeigenschaften und/oder Gleitreibungseigenschaften vorhanden, sowie ein sehr geringer Verschleiß, der auch zu einer höheren Lebensdauer der Kunststoff-Formteile und/oder -bauteile führt.

Bei dem erfindungsgemäßen Verfahren werden mit Perfluorpolymer-(Mikro-)Pulvern modifizierte Oberflächen von Formteilen und/oder Bauteilen aus Kunststoffen hergestellt, indem Perfluorpolymer-(Mikro-)Pulver mit einer Perfluorpolymer-(peroxy- )Radikal-Konzentration von > 5 ·10¹⁶ Spin/g_{Perfluorpolymer} auf eine feste Oberfläche von Kunststoffen, die olefinisch ungesättigten Doppelbindungen mindestens an der Oberfläche aufweisen, bei Raumtemperatur die Oberfläche vollständig bedeckend aufgebracht und dort während und/oder nach dem Aufbringen der modifizierte Perfluorpolymer-(Mikro-)Pulver eine reaktive Umsetzung unter mechanischer Beanspruchung durchgeführt, wobei eine nachfolgende Temperung der Kunststoffe mit den modifizierten gekoppelten Perfluorpolymer-(Mikro-)Pulvern ausgeschlossen ist.

Als Perfluorpolymer-(Mikro-)Pulver mit einer Perfluorpolymer-(peroxy-)Radikal-Konzentration von > 5 ·10¹⁶ Spin/g_{Perfluorpolymer} werden vorteilhafterweise strahlenchemisch und/oder plasmachemisch modifizierte Perfluorpolymer-(Mikro-)Pulver eingesetzt.

Als derartige modifizierte Perfluorpolymer-(Mikro-)Pulver werden vorteilhafterweise PTFE- und/oder PFA- und/oder FEP-Pulver mit Perfluoralkyl-(peroxy-)Radikalen aus dem Polymerisationsprozess, noch vorteilhafterweise strahlenchemisch und/oder plasmachemisch modifizierte PTFE- und/oder PFA- und/oder FEP-Pulver eingesetzt. Dabei sind insbesondere die strahlenchemisch modifizierten Perfluorpolymer-(Mikro- )Pulver mit einer Strahlendosis von > 50 kGy und vorzugsweise ≥ 100 kGy modifiziert und weisen eine Konzentration von > 5 ·10¹⁶ Spin/g_{Perfluorpolymer} und vorzugsweise > 10¹⁸ Spin/g_{Perfluorpolymer} an Perfluoralkyl-(peroxy-)Radikalen auf.

Im Falle der strahlenchemischen Modifizierung der Perfluorpolymer-(Mikro-)Pulver ist es weiter vorteilhaft, dies in Gegenwart von Reaktanten und vorzugsweise unter Sauerstoffeinfluss zu realisieren.

Durch die strahlenchemische und/oder plasmachemische Behandlung der Perfluorpolymer-(Mikro-)Pulver werden Perfluorpolymer-(peroxy-)Radikale sowie funktionelle Gruppen generiert, wobei in Gegenwart von Sauerstoff bei der Behandlung für Sauerstoff zugängliche Radikale an der PerfluorpolymerPartikeloberfläche Perfluorpolymerperoxy-Radikale erzeugt werden.

Erfindungsgemäß werden Kunststoff-Oberflächen in Form von Form- und/oder Bauteilen aus Polymeren modifiziert, die mindestens olefinisch ungesättigte Doppelbindungen mindestens an der Oberfläche aufweisen, wobei diese olefinisch ungesättigten Doppelbindungen vorteilhafterweise auch Bestandteil von Gruppen der Seitenkette und/oder in der Hauptkette der Polymere sein können.

Als Polymere mit olefinisch ungesättigten Doppelbindungen werden vorteilhafterweise Elastomere/Gummi oder Kautschuk vor der Vulkanisation oder thermoplastische Elastomere oder Thermoplaste oder Duromere, jeweils an der Oberfläche, eingesetzt, wie SBR, NBR, HNBR, XNBR, EPDM, BR, IR, NR, SBS, SEBS, SEPS, SEEPS, MBS und Mischungen daraus, ABS sowie Blends aus ABS mit PA oder ABS und PC, BMC (Bulk-Molding-Compound) oder SMC (Sheet-Molding-Compound) auf UP(ungesättigtes Polyester)-Harz- oder Vinylester-Harz-Basis als Prepreg und/oder ausgehärtetes Material, das noch olefinisch ungesättigte Doppelbindungen an der Oberfläche besitzt.

Von besonderer Bedeutung bei dem erfindungsgemäßen Verfahren ist einerseits, dass bei Raumtemperatur, vorzugsweise bei 18 - 25 °C, die modifizierten Perfluorpolymer-(Mikro-)Pulver mit einer Perfluorpolymer-(peroxy-)Radikal-Konzentration von > 5 ·10¹⁶ Spin/g_{Perfluorpolymer} auf die Kunststoffoberfläche aufgebracht werden.

Dabei kann vorteilhafterweise die feste Kunststoff-Oberfläche eine Temperatur bis 200 °C, vorzugsweise 150 °C aufweisen, wobei der Fachmann unter Beachtung der thermischen Stabilität und vor allem der Wärmeformstabilität des eingesetzten Materials für das Form- oder Bauteil die Temperatur entsprechend auswählt.

Andererseits ist von Bedeutung, dass die reaktive Umsetzung unter mechanischer Beanspruchung stattfindet, die vorteilhafterweise
- eine Druckbeanspruchung, wie Reiben und/oder Bürsten und/oder Ultraschall ohne oder mit Trägerkörpern aus Metall und/oder Keramik und/oder Kunststoff und/oder
- eine Beanspruchung nach dem Aufbringen des modifizierten Perfluorpolymer-(Mikro-)Pulvers auf die Form- oder Bauteiloberfläche durch beschleunigte Trägerkörper aus Metall und/oder Keramik und/oder Kunststoff und/oder
- eine Beanspruchung durch beschleunigte Trägerkörper aus Metall und/oder Keramik und/oder Kunststoff gemeinsam mit dem modifizierten Perfluorpolymer-(Mikro-)Pulver
   und/oder
- eine Beanspruchung durch beschleunigte Trägerkörper aus Metall und/oder Keramik und/oder Kunststoff, auf die zuvor das modifizierte Perfluorpolymer-(Mikro- )Pulver adsorptiv aufgebracht wurde,
sein kann.

Dabei ist es vorteilhaft, wenn das modifizierte Perfluorpolymer-(Mikro-)Pulver mit einer Perfluorpolymer-(peroxy-)Radikal-Konzentration von > 5 ·10¹⁶ Spin/g_{Perfluorpolymer} während und nach dem Aufbringen durch elektrostatische Adsorption auf der festen Kunststoff-Oberfläche positioniert wird.

Dadurch ist auch eine Bewegung der Kunststoff-Oberfläche vor der mechanischen Beanspruchung möglich und das Pulver kann seine Position auf der Oberfläche nicht oder nicht wesentlich verändern, ist also elektrostatisch fixiert.

Durch die erfindungsgemäße mechanische Beanspruchung der modifizierten Perfluorpolymer-(Mikro-)Pulver mit einer Perfluorpolymer-(peroxy-)Radikal-Konzentration von > 5 ·10¹⁶ Spin/g_{Perfluorpolymer} während und/oder nach dem Aufbringen auf die feste Kunststoffoberfläche bei Raumtemperatur wird erst die chemische Kopplung zwischen der Kunststoffoberfläche und dem Perfluorpolymer-(Mikro-)Pulver erreicht. Die chemische Kopplung erfolgt über eine Reaktion der Perfluorpolymer-(peroxy-)Radikale der modifizierten Perfluorpolymer-(Mikro-)Pulver mit den olefinisch ungesättigten Doppelbindungen an der Kunststoffoberfläche unter Bildung kovalenter Bindungen, wodurch Perfluorpolymerpartikel auf der Kunststoffoberfläche fixiert werden.

Dabei ist von Bedeutung, dass infolge der vorteilhafterweise strahlenchemischen und/oder plasmachemischen Behandlung der Perfluorpolymer-(Mikro-)Pulver der überwiegende Teil an generierten Perfluorpolymer-(peroxy-)Radikalen und funktionellen Gruppen sich jedoch nicht direkt auf der Perfluorpolymerpartikeloberfläche, sondern in den amorphen, oberflächennahen Bereichen der Perfluorpolymerpartikel befinden, und durch Perfluorpolymerketten abgedeckt nicht frei zugänglich und dadurch sterisch an einer Reaktion gehindert sind.

Durch die reaktive Umsetzung unter mechanischer Beanspruchung werden die Perfluorpolymerketten der Pulverpartikel bewegt und dadurch werden Perfluorpolymer-(peroxy-)Radikale, die bisher durch die Perfluorpolymerketten abgedeckt waren, freigelegt und können an der Reaktion mit den olefinisch ungesättigten Doppelbindungen der Kunststoffoberfläche teilnehmen, die nur bei direktem Kontakt zwischen Radikalen und Doppelbindungen erfolgt, und somit eine bedeutend stärkere und festere kovalente Kopplung des Pulvers auf der Kunststoff-Oberfläche im Gegensatz zu einer nur adsorptiven und/oder elektrostatischen Wechselwirkung realisieren.

Im Gegensatz zu Lösungen des Standes der Technik, bei dem Perfluorpolymer-(Mikro-)Pulverpartikel auf Kunststoff-Oberflächen unter Anwendung von erhöhtem Druck und Temperatur aufgebracht und fixiert werden, ist es erfindungsgemäß notwendig, durch eine mechanische Beanspruchung der oberflächennahen Bereiche der Perfluorpolymer-(Mikro-)Pulverpartikel das Freilegen der Perfluorpolymer-(peroxy-)Radikale zu erreichen, wodurch dann die radikalische Kopplungsreaktion in ausreichendem Maße stattfinden kann.

Die mechanische Beanspruchung wird beispielsweise durch Verfahren wie
- Reiben des reinen modifizierten Perfluorpolymer-(Mikro-)Pulvers mittels Gegenkörper auf der Kunststoff-Oberfläche und/oder
- Reiben in Kombination mit Trägerkörpern aus Metall und/oder Keramik und/oder Kunststoff zusammen mit modifiziertem Perfluorpolymer-(Mikro-)Pulver und/oder
- Reiben in Kombination mit Trägerkörpern aus Metall und/oder Keramik und/oder Kunststoff, auf deren Oberfläche modifiziertes Perfluorpolymer-(Mikro- )Pulver mittels Ladungen/elektrostatisch adsorbiert vorliegt, und/oder
- Bürsten des modifizierten Perfluorpolymer-(Mikro-)Pulvers auf der Kunststoff-Oberfläche und/oder
- Bürsten des modifizierten Perfluorpolymer-(Mikro-)Pulvers in Kombination mit Trägerkörpern aus Metall und/oder Keramik und/oder Kunststoff und/oder
- Ultraschall(schwingungen), indem die Sonotrode direkt als Gegenkörper modifiziertes Perfluorpolymer-(Mikro-)Pulver auf der Kunststoff-Oberfläche flächig oder lokal einreibt und/oder
- Ultraschall(schwingungen), indem die Sonotrode als Gegenkörper modifiziertes Perfluorpolymer-(Mikro-)Pulver in Kombination mit Trägerkörpern aus Metall und/oder Keramik und/oder Kunststoff auf der Kunststoff-Oberfläche flächig oder lokal einreibt und/oder
- Ultraschall(schwingungen), indem die Sonotrode einen Behälter anregt, in dem Kunststoffbauteile/-formteile zusammen mit modifiziertem Perfluorpolymer-(Mikro-)Pulver und (Träger-)Körpern aus Metall und/oder Keramik und/oder Kunststoff, vorzugsweise in Form von Kugeln, platziert sind, und/oder
- Modifizierung in einer Schwingmühle, in der die Kunststoffbauteile/-formteile zusammen mit modifiziertem Perfluorpolymer-(Mikro-)Pulver und (Träger-)Körpern aus Metall und/oder Keramik und/oder Kunststoff, vorzugsweise in Form von Kugeln, platziert sind, und/oder
- Modifizierung mit einem Rüttler/Vibrator, in der die Kunststoffbauteile/- formteile mit modifiziertem Perfluorpolymer-(Mikro-)Pulver auf der Oberfläche direkt mit einem Gegenkörper oder zusammen mit (Träger-)Körpern aus Metall und/oder Keramik und/oder Kunststoff, vorzugsweise in Form von Kugeln, platziert sind, und/oder
- Modifizierung in einem Taumeltrockner, in dem die Kunststoffbauteile/- formteile zusammen mit modifiziertem Perfluorpolymer-(Mikro-)Pulver und (Träger- )Körpern aus Metall und/oder Keramik und/oder Kunststoff, vorzugsweise in Form von Kugeln, platziert sind, und/oder
- beschleunigte Trägerkörper aus Metall oder Keramik oder Glas oder Kunststoff, auf deren Oberfläche das modifizierte Perfluorpolymer-(Mikro-)Pulver mittels Ladungen/elektrostatisch adsorbiert vorliegt und die mittels Druckluft [beispielsweise www.kst-hagen.de, Kugelstrahltechnik GmbH Hagen] oder durch einen Twister [www.twister-sand-strahl-anlage.de, BMF GmbH, Chemnitz] in Form eines modifizierten/abgewandelten (Sand-)Strahlverfahrens beschleunigt auf die Kunststoff-Oberfläche geschleudert werden, und/oder
- beschleunigte Trägerkörper aus Metall oder Keramik oder Kunststoff, die zusammen mit dem modifizierten Perfluorpolymer-(Mikro-)Pulver und die mittels Druckluft in Form eines modifizierten/abgewandelten Sandstrahlverfahrens beschleunigt auf die Kunststoff-Oberfläche geschleudert werden, und/oder
- beschleunigte Trägerkörper aus Metall oder Keramik oder Kunststoff, auf deren Oberfläche das modifizierte Perfluorpolymer-(Mikro-)Pulver mittels Ladungen/elektrostatisch adsorbiert vorliegt und im Fall von magnetischen Trägermaterialien elektromagnetisch beschleunigt auf die Kunststoff-Oberfläche geschleudert werden, und/oder
- beschleunigte Trägerkörper aus Metall oder Keramik oder Kunststoff, die zusammen mit dem modifizierten Perfluorpolymer-(Mikro-)Pulver und im Fall von magnetischen Trägermaterialien elektromagnetisch beschleunigt auf die Kunststoff-Oberfläche geschleudert werden,
realisiert.

Die einzelnen Verfahrensformen der mechanischen Beanspruchung können einzeln oder sofern technisch machbar auch kombiniert zur Modifizierung der Kunststoff-Oberflächen eingesetzt werden. Weiterhin ist der Einsatz als Einzelverfahren oder als kombiniertes Verfahren auch davon abhängig, ob eine Kunststoff-Oberfläche nur lokal oder flächig modifiziert werden soll, was der Fachmann leicht entscheiden und in wenigen Versuchen testen kann.

In dem erfindungsgemäßen Verfahren zur Oberflächenmodifizierung von Formteilen und/oder Bauteilen aus Kunststoffen für tribologische Anwendungen werden die erfindungsgemäßen modifizierten Perfluorpolymere als (Mikro-)Pulver eingesetzt und auf der Kunststoff-Oberfläche chemisch gekoppelt/fixiert.

Diese modifizierten Perfluorpolymer-(Mikro-)Pulver können aber auch in einer gebundenen Form, wie beispielsweise zu einer Paste oder konzentrierten Dispersion verarbeitet oder in Form eines Sprays, zur erfindungsgemäßen Oberflächenmodifizierung zum Einsatz kommen. Folglich können in einzelne Verfahren zur Oberflächenmodifizierung von Kunststoffen für tribologische Anwendungen strahlenchemisch und/oder plasmachemisch modifizierte Perfluorpolymere als Paste, als konzentrierte Dispersion oder in Form eines Sprays auf eine Kunststoffoberfläche aufgebracht und unter mechanischer Beanspruchung (vorzugsweise durch Reiben, Bürsten und/oder mittels Ultraschall) auf der Kunststoffoberfläche chemisch gekoppelt/fixiert werden.

Das modifizierte Perfluorpolymer-(Mikro-)Pulver besitzt vor der radikalischen Kopplungsreaktion eine Konzentration mit einer Perfluorpolymer-(peroxy-)Radikalen von > 5 ·10¹⁶ Spin/g_{Perfluorpolymer}, vorteilhafterweise von > 10¹⁷ Spin/g_{Perfluorpolymer} und sollte vorzugsweise > 10¹⁸ Spin/g_{Perfluorpolymer} besitzen, wobei die reale Konzentration zugänglicher Perfluorpolymer-(peroxy-)Radikale in der oberflächennahen Region entscheidend ist, die dort erfindungsgemäß mindestens die Konzentration von > 5 ·10¹⁶ Spin/g_{Perfluorpolymer} aufweist.

Zur strahlenchemischen und/oder plasmachemischen Modifizierung können die Perfluorpolymer-(Mikro-)Pulver in reiner Form oder als Gemisch eingesetzt werden, wobei auch entsprechend modifizierte und vorbehandelte Regenerate/Recyclate eingesetzt werden können. Als vorteilhaft hat sich erwiesen, strahlenchemisch und/oder plasmachemisch modifizierte Perfluorpolymer-(Mikro-)Pulver zu vermahlen, was aber nicht zwingend erforderlich ist. Die strahlenchemische und/oder plasmachemische Modifizierung der Perfluorpolymer-(Mikro-)Pulver wird nach bekannten Verfahren durchgeführt, indem das Perfluorpolymer-(Mikro-)Pulver mit hochenergetischer elektromagnetischer Strahlung, wie Gammastrahlen und/oder Röntgenstrahlen, und/oder Teilchenstrahlung, wie Elektronenstrahlen, mit einer Strahlendosis von mindestens 50 kGy und vorteilhafterweise ≥ 100 kGy unter Inertgas oder in Gegenwart von Reaktanten, wie beispielsweise (Luft-)Sauerstoff, bestrahlt wird, und so eine Konzentration von > 5 10¹⁶ Spin/g_{Perfluorpolymer} und vorzugsweise > 10¹⁸ Spin/g_{Perfluorpolymer} an Perfluorpolymer-(peroxy-)Radikalen im oberflächennahen Bereich der Perfluorpolymer-(Mikro-)Pulverpartikel für die radikalische Kopplung mit der Kunststoff-Oberfläche erzeugt wird. Als technisch vorteilhaft hat sich die Bestrahlung von Perfluorpolymer-(Mikro-)Pulvern mit Strahlendosen von 100 bis 2000 kGy erwiesen, wobei die generierten Radikalkonzentrationen stark abhängig vom jeweiligen Strahlenregime und von der Art des eingesetzten Perfluorpolymer-(Mikro-)Pulvers ist. Andererseits können auch speziell polymerisierte und/oder plasmabehandelte Perfluorpolymer-(Mikro-)Pulver mit einer Konzentration von > 5 · 10¹⁶ Spin/g_{Perfluorpolymer} an Perfluorpolymer-(peroxy- )Radikalen im oberflächennahen Bereich der Perfluorpolymer-(Mikro-)Pulverpartikel aus dem Polymerisations- und/oder Plasmamodifizierungsprozess eingesetzt werden.

Überraschenderweise hat sich gezeigt, dass die durch die mechanische Beanspruchung während der reaktiven Umsetzung freigelegten Perfluorpolymer-(peroxy-)Radikale im oberflächennahen Bereich der Perfluorpolymer-(Mikro- )Pulverpartikel so viele Kopplungsstellen bieten, dass die chemische Kopplung durch kovalente Bindung der modifizierten Perfluorpolymer-(Mikro-)Pulver auf der Kunststoff-Oberfläche erreicht wird.

Eine Erwärmung des Kunststoffformteils/-Bauteils auf "die onset-Temperatur des Reaktionspeaks in der DSC-Kurve", wie dies gemäß DE 100 42 566 A1 notwendig ist, ist erfindungsgemäß nicht erforderlich.

Es kann jedoch eine Erwärmung der Kunststoff-Oberfläche oder des gesamten Bauteils unter Beachtung der Wärmestabilität des Materials sowie der Wärmeformbeständigkeit bis zu 200 °C und vorzugsweise bis 150 °C durchgeführt werden, wobei unbedingt die Oberfläche des Kunststoffes den festen Aggregatzustand behalten und der mechanischen Beanspruchung widerstehen muss.

Unter mechanischer, also auch tribologischer Beanspruchung während der Modifizierung der Kunststoff-Oberflächen und/oder im Anwendungsfall werden die chemisch gekoppelten Perfluorpolymer-(Mikro-)Pulverpartikel weiter zerrieben, wobei die Teilstücke in unmittelbarer Nähe oder an anderer Stelle unter mechanischer Beanspruchung, insbesondere Reibung, über eine radikalische Kopplungsreaktion mit olefinisch ungesättigten Doppelbindungen verbunden und somit an der Kunststoff-Oberfläche fixiert werden, und so eine weitere Zer- und Verteilung auf der gewünschten Kunststoff-Oberfläche oder einem Teilbereich davon einstellt und/oder erreicht wird.

Andererseits ist es von Vorteil, wenn schon bei der Herstellung der modifizierten Kunststoff-Oberflächen unter den erfindungsgemäßen Herstellungsbedingungen eine möglichst optimale Belegung mit gekoppelten Perfluorpolymer-(Mikro- )Pulverpartikeln realisiert wird.

Für die tribologische Modifizierung der gesamten Oberfläche oder nur lokal, das heißt begrenzt von Teilen der Oberfläche von Form- oder Bauteilen, die olefinisch ungesättigte Doppelbindungen an der Oberfläche besitzen, können folgende Kunststoffe eingesetzt werden:
- für Formteile aus Kautschuk (vor der Vulkanisation) und Form- und Bauteile aus Elaste/Gummi wie beispielsweise SBR, NBR, HNBR, XNBR, EPDM, BR, IR, NR sowie weitere Butadien- und/oder Isopren-Copolymere oder Butadien- und/oder Isopren-Ter-Polymere und Mischungen daraus, die olefinisch ungesättigte Gruppen in der Seitenkette und/oder in der Hauptkette besitzen, sowie Mischungen mit weiteren Polymeren
- für Form- und Bauteile aus thermoplastischem Elastomer (TPE-S → Styrol-Blockcopolymere) wie beispielsweise SBS, SEBS, SEPS, SEEPS, MBS und Mischungen daraus oder mit weiteren Polymeren
- für Formteile aus Thermoplast wie beispielsweise ABS sowie Blends aus ABS mit PA oder ABS und PC
- für Form- und Bauteile aus Duromer und speziell aus faserverstärkten Duromeren wie beispielsweise BMC (Bulk-Molding-Compound) oder SMC (Sheet-Molding-Compound) auf UP(ungesättigtes Polyester)-Harz- oder Vinylester-Harz-Basis als Prepreg und/oder ausgehärtetes Material, das noch olefinisch ungesättigte Doppelbindungen an der Oberfläche besitzt, oder auf Epoxidharz-Basis als Prepreg und/oder ausgehärtetes Material, wobei die Oberfläche nachträglich modifiziert Gruppen mit olefinisch ungesättigten Doppelbindungen besitzt.

Bei dem erfindungsgemäßen Verfahren zur Herstellung von oberflächenmodifizierten Kunststoffen in Form von Form- und Bauteilen ist eine vorherige Bulkmodifizierung mit Perfluorpolymer, wie im Stand der Technik beschrieben, nicht notwendig und auch nicht empfehlenswert, da das Perfluorpolymer in den Anwendungsfällen an der Oberfläche wirksam werden soll und nicht erst nach einem Einlaufverschleiß die tribologischen Eigenschaften entfalten soll. Vor allem bei weichen Materialien wie Elastomer/Gummi oder TPE tritt bei den, mit chemisch gekoppeltem Perfluorpolymer bulkmodifizierten Materialien noch das Phänomen auf, dass die chemisch gekoppelten Perfluorpolymerpartikel vom Matrixpolymer eingekapselt vorliegen und der Festschmierstoff nur wenig oder nicht mehr effektiv wirksam ist.

Experimente zur Bulkmodifizierung von NBR mit Perfluorpolymer-(Mikro-)Pulver haben gezeigt, dass hier Perfluorpolymer-(Mikro-)Pulver und speziell PTFE-Mikropulver mit niedrigen Radikalkonzentrationen mit < 10¹⁷ Spin/g_{PTFE} und vorzugsweise < 10¹⁶ Spin/g_{PTFE} tribologisch effektiver sind und im Klötzchen/Ring-Versuch die besten Gleitreibungs- und Verschleißeigenschaften zeigten, da die Festschmierstoffpartikel nicht "zupolymerisiert und verkapselt", das heißt zugepfropft vorliegen.

Ganz im Gegensatz zu den erfindungsgemäßen Kunststoffoberflächen und dem Verfahren zu ihrer Herstellung werden die Gleitreibungszahlen und auch der Verschleiß bei diesen Materialien gesenkt. Dagegen werden bei der Einarbeitung von PTFE-Mikropulver mit Spinzahlen > (größer) 10¹⁷ Spin/g_{PTFE} und vor allem bei Spinzahlen > (größer) 10¹⁸ Spin/g_{PTFE} in NBR die Gleitreibungszahlen geringfügig gesenkt, jedoch steigt der Verschleiß im Klötzchen/Ring-Versuch merklich an, was auf die stärker verkapselten Festschmierstoffpartikel zurückgeführt wird.

Diese Nachteile zeigen die erfindungsgemäß oberflächenmodifizierten Materialien nicht, sondern es werden gerade bei höheren Radikalkonzentrationen bessere Gleitreibungs- und Verschleißeigenschaften erreicht. Bei Zusatz oder in Gegenwart von Ölen oder Fetten hat sich gezeigt, dass die gekoppelten Perfluorpolymerpartikel zusätzlich in gewissem Maße als Ölspeicher fungieren, was die tribologischen Eigenschaften vor allem beim Einlaufverhalten oder unter Notlaufbedingungen wesentlich verbessert. Vorteilhaft haben sich solche oberflächenmodifizierten Form- und Bauteile durch ein leichteres Gleiten auch unter Montagebedingungen erwiesen.

Nach der erfindungsgemäßen Herstellung der erfindungsgemäßen oberflächenmodifizierten Kunststoffe konnte über REM, EDX und ATR-Spektroskopie nach der Reinigung von ungebundenem Perfluorpolymer-(Mikro-)Pulverpartikel für Formteile (Platten) aus EPDM, SBR, NBR, NR, SBS, SEBS und ABS chemisch gekoppeltes Perfluorpolymer-(Mikro-)Pulverpartikel auf der Oberfläche nachgewiesen werden.

Ohne die mechanische Beanspruchung durch das Reiben wurde bei Vergleichsversuchen keine Kopplung von Perfluorpolymer-(Mikro-)Pulverpartikeln auf der Kunststoff-Oberfläche festgestellt.

Die erfindungsgemäße radikalische Kopplung der Perfluorpolymer-(Mikro-)Pulver auf Kunststoff-Oberflächen führt zur Verbesserung der Gleitreibungseigenschaften sowie zur Erhöhung der Verschleißfestigkeit im Vergleich zu den unmodifizierten Oberflächen im Klötzchen/Ring-Versuch.

Zur weiteren Verbesserung der Verschleißfestigkeit ist es vorteilhaft, die chemisch gekoppelten Perfluorpolymer-(Mikro-)Pulverpartikel gleichzeitig als Speichermedium für Öle und Fette sowie Perfluorpolyetheröl (PFPE) zu nutzen. Das PFPE ist mit den Polymermatrices unverträglich, löst sich nicht in herkömmlichen Ölen, Fetten und Lösemitteln und trägt zur Erniedrigung des Reibungskoeffizienten bei gleichzeitiger Erhöhung der Verschleißfestigkeit bei.

Erfindungsgemäß hergestellt werden die über radikalische Kopplung mit Perfluorpolymer-(Mikro-)Pulverpartikeln modifizierten Kunststoff-Oberflächen, indem beispielsweise ein PFA-Emulsionspolymerisat (Dyneon/3M) mit 500 kGy elektronenbestrahlt und ein PTFE-Emulsionspolymerisat (TF 2025, Dyneon/3M) in Gegenwart von Luft mit 750 kGy Gamma-bestrahlt wird. Während der Bestrahlung unter Abbau zu Mikropulver werden Radikale erzeugt, die in Gegenwart von Luft sich teilweise in bei Raumtemperatur stabile/langlebige Peroxyradikale umwandeln.

Das nach dem Stand der Technik vielfach praktizierte Tempern darf nicht durchgeführt werden, da sonst die generierten Perfluorpolymer-(peroxy-)radikale beseitigt werden.

Somit werden aktive Perfluorpolymer-(peroxy-)Radikal-Zentren gezielt für die Kopplung mit olefinisch ungesättigten Doppelbindungen von Gruppen an den Kunststoffen der Form- und Bauteile genutzt, indem über eine radikalische Kopplung chemisch mit Perfluorpolymer-(Mikro-)Pulverpartikeln modifizierte Oberflächen entstehen.

Eine derartige Oberflächenmodifizierung von Perfluorpolymer-(Mikro-)Pulvern auf Kunststoff-Oberflächen mit olefinisch ungesättigten Gruppen wurde vor der Erfindung noch nicht realisiert oder beschrieben.

Es wird mit der erfindungsgemäßen Lösung ein hoher und stabiler Bedeckungsgrad mit Perfluorpolymer-(Mikro-)Pulverpartikeln erreicht, der nach dem Stand der Technik nur mit Pressen und Temperaturerhöhung nicht realisierbar ist.

Durch die Oberflächenkopplung weisen die Form- und Bauteile im Vergleich zu den mit Perfluorpolymer bulkmodifizierten Materialien verbesserte mechanische Eigenschaften hinsichtlich der Druck- und Zugfestigkeit sowie der Steifigkeit auf, da das Matrixgefüge nicht verändert wird, und wesentlich bessere tribologische (Oberflächen-)Eigenschaften auf. Diese Produkte sind vor allem von Interesse für Gleitreibungsprozesse. Durch die radikalische Kopplung der Perfluorpolymerpartikel auf der Form- und Bauteiloberfläche wird durch die Anbindung eine Verbesserung der Verschleißfestigkeit erreicht, da das Perfluorpolymer-Korn nicht durch mechanische Beanspruchung (vollständig) weggerieben werden kann.

Dies kann für dynamische Dichtungssysteme mit den erfindungsgemäß modifizierten Kunststoff-Oberflächen(bereichen) für eine höhere Lebensdauer ebenso wie im KFZ-Bereich gegen die unerwünschten Stick-Slip-Erscheinungen in Form von Quietsch- und/oder Knarzgeräuschen angewandt werden. Im Maschinenbau allgemein können Gleitflächen, Gleitblöcke, Wischer usw. erfindungsgemäß oberflächenmodifiziert und so mit tribologisch optimerten Oberflächen ausgerüstet werden. Vielfach werden bisher hierfür Gleitlacke als Montagehilfsmittel oder für tribologische Einlaufprozesse aufgetragen, die jedoch meist schon nach kurzer Zeit ihre Wirkung verlieren.

Nachfolgend wird die Erfindung an mehreren Ausführungsbeispielen näher erläutert.

### Vergleichsbeispiel 1:

Auf eine Stahlplatte von 60 mm x 60 mm wird eine vulkanisierte NBR-Platte mit 50 mm x 50 mm und einer Dicke von 2 mm positioniert und mit einer dünnen Schicht PFA-Pulver (PFA 6502 TAZ, 3M/Dyneon, elektronenbestrahlt mit 500 kGy) mit einer Perfluoralkyl-(peroxy-)Radikal-Konzentration von > 10²⁰ Spin/g_{PFA} belegt. Darauf wird eine Stahlplatte von 60 mm x 60 mm gelegt. Auf diese Stahlplatte wird wieder eine vulkanisierte NBR-Platte mit 50 mm x 50 mm und einer Dicke von 2 mm gelegt, worauf wieder eine Stahlplatte von 60 mm x 60 mm gelegt wird. Dieses Paket wird in einer Presse mit einem Stempeldurchmesser von 120 mm eingelegt und bei Raumtemperatur mit 100 kN beaufschlagt. Nach 10 Minuten wird entspannt und das Paket entnommen. Die NBR-Platte, die mit PFA-Pulver belegt war, wird entnommen und mit Ethanol gründlich unter leichtem Bürsten mit einem Pinsel gewaschen. Nach dem Trocknen der Platte fühlt sich die Oberfläche wie die des Ausgangsmaterials an. Von der Oberfläche perlt das Wasser nicht ab, sondern fließt wie beim Ausgangsmaterial langsam herunter.

Im REM-Bild ist flächig kein PFA und im EDX-Bild ist kein Fluor sichtbar. Im EDX-Spektrum ist bis auf geringe Spuren in der Nähe der Nachweisgrenze kein Fluor detektierbar, das heißt, dass nur unter Druck keine Oberflächenmodifizierung erfolgt ist.

Tribologische Untersuchungen im Klötzchen/Ring-Test haben gezeigt, dass Stick-Slip-Erscheinungen auftreten und keine Unterschiede zum Ausgangsmaterial in den Gleitreibungseigenschaften auftreten.

### Vergleichsbeispiel 2:

Auf eine Stahlplatte von 60 mm x 60 mm wird eine vulkanisierte NBR-Platte mit 50 mm x 50 mm und einer Dicke von 2 mm positioniert und mit einer dünnen Schicht PFA-Pulver (PFA 6502 TAZ, 3M/Dyneon, elektronenbestrahlt mit 500 kGy) mit einer Perfluoralkyl-(peroxy-)Radikal-Konzentration von > 10²⁰ Spin/g_{PFA} belegt. Darauf wird eine Stahlplatte von 60 mm x 60 mm gelegt. Auf diese Stahlplatte wird wieder eine vulkanisierte NBR-Platte mit 50 mm x 50 mm und einer Dicke von 2 mm gelegt, worauf wieder eine Stahlplatte von 60 mm x 60 mm gelegt wird. Dieses Paket wird in einer Presse mit einem Stempeldurchmesser von 120 mm eingelegt und bei einer Temperatur von 80 °C mit 100 kN beaufschlagt. Nach 10 Minuten wird entspannt und das Paket entnommen. Die NBR-Platte, die mit PFA-Pulver belegt war, wird entnommen und mit Ethanol gründlich unter leichtem Bürsten mit einem Pinsel gewaschen. Nach dem Trocknen der Platte fühlt sich die Oberfläche wie die des Ausgangsmaterials an.

Die Ergebnisse sind analog zum Vergleichsbeispiel 1, das heißt, dass nur unter Druck und Temperatur keine Oberflächenmodifizierung erfolgt ist und auch keine Unterschiede zum Ausgangsmaterial in den Gleitreibungseigenschaften auftreten.

### Vergleichsbeispiel 3:

Auf eine Stahlplatte von 60 mm x 60 mm wird eine vulkanisierte NBR-Platte mit 50 mm x 50 mm und einer Dicke von 2 mm positioniert und mit einer dünnen Schicht PTFE-Pulver (TF9205, 3M/Dyneon, unbestrahlt, thermomechanisch abgebaut, ohne Radikale) belegt. Darauf wird eine Stahlplatte von 60 mm x 60 mm gelegt. Auf diese Stahlplatte wird wieder eine vulkanisierte NBR-Platte mit 50 mm x 50 mm und einer Dicke von 2 mm gelegt, worauf wieder eine Stahlplatte von 60 mm x 60 mm gelegt wird. Dieses Paket wird in einer Presse mit einem Stempeldurchmesser von 120 mm eingelegt und bei einer Temperatur von 120 °C mit 100 kN beaufschlagt. An die mittlere Platte wird nun ein Vibrator positioniert, mit dem diese Platte zum Schwingen angeregt wird. Nach 10 Minuten wird der Versuch beendet, entspannt und das Paket entnommen. Die NBR-Platte, die mit TF9205-Pulver belegt war, wird entnommen und mit Ethanol gründlich unter leichtem Bürsten mit einem Pinsel gewaschen. Nach dem Trocknen der Platte fühlt sich die Oberfläche wie die des Ausgangsmaterials an.

Die Ergebnisse sind analog zum Vergleichsbeispiel 1, das heißt, dass mit radikalfreiem Perfluorpolymerpulver unter Druck, Temperatur und Scherung keine Oberflächenmodifizierung erfolgt ist und auch keine Unterschiede zum Ausgangsmaterial in den Gleitreibungseigenschaften auftreten.

### Beispiel 1:

Analog zum Vergleichsbeispiel 1 wird das Paket vorbereitet, in die Presse eingelegt und unter denselben Bedingungen bei Raumtemperatur mit Druck beaufschlagt. An die mittlere Platte wird nun ein Vibrator positioniert, mit dem diese Platte zum Schwingen angeregt wird. Nach 10 Minuten wird entspannt und das Paket entnommen. Die NBR-Platte, die mit PFA-Pulver (PFA 6502 TAZ, 3M/Dyneon, elektronenbestrahlt mit 500 kGy) mit einer Perfluoralkyl-(peroxy-)Radikal-Konzentration von > 10²⁰ Spin/g_{PFA} belegt war, wird entnommen und mit Ethanol gründlich unter leichtem Bürsten mit einem Pinsel gewaschen. Nach dem Trocknen der Platte ist eine glänzende Oberfläche sichtbar, die sich sehr glatt anfühlt und auf der das Wasser abperlt.

Im REM-Bild sind flächig PFA-Partikel und im EDX-Bild ist sehr intensiv und gleichmäßig auf der NBR-Oberfläche verteilt Fluor sichtbar. Im EDX-Spektrum ist ein starker Fluor-Peak detektierbar, das heißt, dass unter Druck und Vibration (Scherung) auch ohne Temperatur eine Oberflächenmodifizierung erreicht wurde.

Tribologische Untersuchungen im Klötzchen/Ring-Test haben gezeigt, dass bei diesen oberflächenmodifizierten NBR-Materialien keine Stick-Slip-Erscheinungen auftreten. Es wurden Gleitreibungszahlen zwischen 0,20 und 0,23 gemessen, das heißt, diese oberflächenmodifizierten NBR-Materialien unterscheiden sich in den Gleitreibungseigenschaften im Vergleich zum unmodifizierten Ausgangsmaterial.

### Beispiel 2:

Auf einer Stahlplatte von 100 mm x 100 mm wird eine vulkanisierte NR-Platte mit 50 mm x 50 mm und einer Dicke von 2 mm positioniert und mit einer 100 mm x 100 mm Stahlplatte, die in der Mitte ein kreisrundes Loch als Fenster mit einem Durchmesser von 20 mm hat, abgedeckt und verschraubt, so dass das NR nur in der Aussparung sichtbar ist. Die 2 Stahlplatten mit der NR-Probe werden auf einem Heiztisch fixiert und auf 100 °C erwärmt. Auf das sichtbare/zugängliche NR im Fenster wird nun PTFE-Mikropulver (Zonyl MP 1200, DuPont, schon vom Hersteller strahlenmodifiziert, Spinzahl von 1,37 x 10¹⁸ Spin/g_{PTFE}) gegeben und mit einer harten Bürste in einer kreisenden Bewegung auf der NR-Oberfläche eingerieben. Nach 2 Minuten wird der Versuch abgebrochen und die NR-Platte entnommen. Die NR-Platte, die lokal mit PTFE-Pulver belegt war, wird abgesaugt und mit Ethanol gründlich unter leichtem Bürsten mit einem Pinsel gewaschen. Nach dem Trocknen der Platte ist die lokal behandelte Oberfläche als glänzende Fläche sichtbar, die sich sehr glatt anfühlt und von der das Wasser abperlt im Gegensatz zu den unbehandelten Randzonen.

Im REM-Bild sind flächig PTFE-Partikel und im EDX-Bild ist intensiv und gleichmäßig auf der NR-Oberfläche verteilt Fluor sichtbar. Im EDX-Spektrum der lokal behandelten Oberfläche ist ein starker Fluor-Peak detektierbar, das heißt, dass unter Druck, Temperatur und Reibung (Scherung) eine Oberflächenmodifizierung erreicht wurde.

Tribologische Untersuchungen im Klötzchen/Ring-Test haben gezeigt, dass bei diesen oberflächenmodifizierten NR-Materialien keine Stick-Slip-Erscheinungen auftreten. Es wurden Gleitreibungszahlen zwischen 0,22 und 0,25 gemessen, das heißt, diese oberflächenmodifizierten NR-Materialien unterscheiden sich in den Gleitreibungseigenschaften im Vergleich zum unmodifizierten Ausgangsmaterial.

### Beispiel 3:

Auf einer Stahlplatte von 100 mm x 100 mm wird eine vulkanisierte SBR-Platte mit 50 mm x 50 mm und einer Dicke von 2 mm positioniert und mit einer 100 mm x 100 mm Stahlplatte, die in der Mitte ein kreisrundes Loch als Fenster mit einem Durchmesser von 20 mm hat, abgedeckt und verschraubt, so dass das SBR nur in der Aussparung sichtbar ist. Die 2 Stahlplatten mit der SBR-Probe werden auf einem Heiztisch fixiert und auf 50 °C erwärmt. Auf das sichtbare/zugängliche SBR im Fenster werden nun PTFE-Mikropulver (Algoflon L620, Solvay, schon vom Hersteller strahlenmodifiziert, Spinzahl von 6,5 × 10¹⁹ Spin/g_{PTFE}) und Stahlkugeln mit einem Durchmesser von 0,5 mm gegeben. Mit einem kreisrunden Kunststoffstempel (PA66/30GF) werden unter Druck und kreisender Bewegung die Stahlkugeln mit dem PTFE auf der Oberfläche rollend bewegt, so dass das PTFE-Mikropulver auf der zugänglichen Oberfläche des SBR behandelt wird. Nach ca. 5 Minuten wird der Versuch abgebrochen, die Stahlkugeln werden mit einem Magneten abgenommen, und das überschüssige PTFE wird abgesaugt. Die SBR-Platte wird entnommen, und die lokal mit PTFE-Pulver behandelte Stelle wird mit Ethanol gründlich unter leichtem Bürsten mit einem Pinsel gewaschen. Nach dem Trocknen der Platte ist die lokal behandelte Oberfläche als glänzende Fläche sichtbar, die sich sehr glatt anfühlt und auf der das Wasser abperlt im Gegensatz zu den unbehandelten Randzonen.

Im REM-Bild sind flächig PTFE-Partikel und im EDX-Bild ist intensiv und gleichmäßig auf der SBR-Oberfläche verteilt Fluor sichtbar. Im EDX-Spektrum der lokal behandelten Oberfläche ist ein starker Fluor-Peak detektierbar, das heißt, dass unter Druck, Temperatur und Reibung (Scherung) eine Oberflächenmodifizierung erreicht wurde.

Tribologische Untersuchungen im Klötzchen/Ring-Test haben gezeigt, dass bei diesen oberflächenmodifizierten SBR-Materialien keine Stick-Slip-Erscheinungen auftreten. Es wurden Gleitreibungszahlen zwischen 0,22 und 0,24 gemessen, das heißt, diese oberflächenmodifizierten SBR-Materialien unterscheiden sich in den Gleitreibungseigenschaften im Vergleich zum unmodifizierten Ausgangsmaterial.

### Beispiel 4:

Eine ABS-Platte von 50 mm x 50 mm und einer Dicke von 2 mm wird mit einer 50 mm x 50 mm Stahlplatte, die in der Mitte ein kreisrundes Loch als Fenster mit einem Durchmesser von 20 mm hat, abgedeckt und verschraubt, so dass das ABS nur in der Aussparung sichtbar ist. Auf das sichtbare/zugängliche ABS im Fenster wird nun PFA-Mikropulver (PFA 6502 TAZ, 3M/Dyneon, elektronenbestrahlt mit 500 kGy) mit einer Perfluoralkyl-(peroxy-)Radikal-Konzentration von > 10²⁰ Spin/g_{PFA}, das zuvor mit PAO (Polyalphaolefin-ÖI) zur Paste verarbeitet wurde, als Paste in einer dünnen Schicht aufgetragen. Mit einer Sonotrode wird mit kurzen Impulsen unter leichtem Druck und kreisender Bewegung die PFA-Paste auf der ABS-Oberfläche mit Ultraschall behandelt. Nach ca. 2 Minuten wird der Versuch abgebrochen. Die ABS-Platte, die lokal mit PFA-Pulver-Paste behandelt wurde, wird erst mit Benzin und anschließend mit Ethanol gründlich unter leichtem Bürsten mit einem Pinsel gewaschen. Nach dem Trocknen der Platte ist die lokal behandelte Oberfläche als glänzende Fläche sichtbar, die sich glatt anfühlt und auf dem das Wasser abperlt im Gegensatz zu den unbehandelten ABS-Randzonen.

Im REM-Bild sind flächig PFA-Partikel und im EDX-Bild ist intensiv und gleichmäßig auf der lokal behandelten ABS-Oberfläche verteilt Fluor sichtbar. Im EDX-Spektrum der lokal behandelten Oberfläche ist ein starker Fluor-Peak detektierbar, das heißt, dass mit der Ultraschall-Behandlung eine Oberflächenmodifizierung erreicht wurde. Tribologische Untersuchungen im Klötzchen/Ring-Test haben gezeigt, dass bei diesen oberflächenmodifizierten ABS-Materialien keine Stick-Slip-Erscheinungen auftreten. Es wurden Gleitreibungszahlen zwischen 0,18 und 0,22 und Verschleißkoeffizienten von 1,8 bis 6,1 × 10⁻⁶ mm³/Nm gemessen, das heißt, diese oberflächenmodifizierten ABS-Materialien unterscheiden sich in den Gleitreibungs- und Verschleißeigenschaften im Vergleich zum unmodifizierten ABS-Ausgangsmaterial. ABS-Materialien als amorphe Werkstoffe sind unmodifiziert hinsichtlich Gleitreibung und Verschleiß als Tribomaterial nicht geeignet.

### Beispiel 5:

Eine teilausgehärtete SMC-Platte auf UP-Harz-Basis von 100 mm x 100 mm und einer Dicke von 2 mm wird mit einer 100 mm x 100 mm Stahlplatte, die in der Mitte einen rechteckigen Spalt mit 20 mm x 50 mm als Fenster hat, abgedeckt und verschraubt, so dass das SMC nur in der Aussparung sichtbar ist. Auf das sichtbare/zugängliche SMC im Fenster wird nun PFA-Mikropulver (PFA 6502 TAZ, 3M/Dyneon, elektronenbestrahlt mit 500 kGy) mit einer Perfluoralkyl-(peroxy- )Radikal-Konzentration von > 10²⁰ Spin/g_{PFA}, das zuvor mit Ethanol benetzt und mit Wasser zur Paste verarbeitet wurde, als Paste in einer dünnen Schicht aufgetragen. Mit einem Sonotrode wird unter leichtem Druck und kreisender Bewegung die PFA-Paste auf der SMC-Oberfläche mit Ultraschall behandelt. Nach ca. 1 Minute wird der Versuch abgebrochen. Die SMC-Platte, die lokal mit PFA behandelt wurde, wird mit einer wässrigen Tensidlösung abgespült. Nach dem Trocknen wird die Platte in einer Form endgültig ausgehärtet. Danach wird die Platte mit Ethanol gründlich unter leichtem Bürsten mit einem Pinsel gewaschen. Nach dem Trocknen der Platte ist die lokal behandelte Oberfläche als glänzende Fläche sichtbar, die sich sehr glatt anfühlt und auf der das Wasser abperlt im Gegensatz zu den unbehandelten Randzonen.

Im REM-Bild sind flächig PFA-Partikel und im EDX-Bild ist intensiv und gleichmäßig auf der behandelten SMC-Oberfläche verteilt Fluor sichtbar. Im EDX-Spektrum der lokal behandelten Oberfläche ist ein starker Fluor-Peak detektierbar, das heißt, dass mit der Ultraschall-Behandlung eine Oberflächenmodifizierung erreicht wurde.

Tribologische Untersuchungen im Klötzchen/Ring-Test haben gezeigt, dass bei diesen oberflächenmodifizierten SMC-Materialien keine Stick-Slip-Erscheinungen auftreten. Es wurden Gleitreibungszahlen zwischen 0,18 und 0,21 und Verschleißkoeffizienten von 0,48 bis 1,51 × 10⁻⁷ mm³/Nm gemessen, das heißt, diese oberflächenmodifizierten SMC-Materialien unterscheiden sich in den Gleitreibungseigenschaften im Vergleich zum unmodifizierten Ausgangsmaterial.

## Patentansprüche

1. Mit Perfluorpolymeren modifizierte Kunststoffe, bei denen die an der Oberfläche von Formteilen und/oder Bauteilen aus Kunststoffen befindlichen olefinisch ungesättigten Doppelbindungen mit den Perfluorpolymer-(peroxy-)radikalen von modifizierten Perfluorpolymer-(Mikro-)Pulvern, nach einer reaktiven Umsetzung unter mechanischer Beanspruchung bei Raumtemperatur über radikalische Kopplung chemisch kovalent gebunden vorliegen, wobei die jeweilige Oberfläche der Kunststoffform- und/oder -bauteile vollständig mit Perfluorpolymer-(Mikro-)Pulver bedeckt ist.

2. Modifizierte Formteile und oder Bauteile aus Kunststoffen nach Anspruch 1, bei denen als Kunststoffe der Form- und/oder Bauteile Polymere mit Gruppen mit olefinisch ungesättigten Doppelbindungen in der Seitenkette und/oder in der Hauptkette an der Oberfläche vorhanden sind, wobei als Polymere mit olefinisch ungesättigten Doppelbindungen Elastomere/Gummi oder Kautschuk vor der Vulkanisation oder thermoplastische Elastomere oder Thermoplaste oder Duromere, jeweils an der Oberfläche, vorhanden sind, und wobei als Polymere SBR, NBR, HNBR, XNBR, EPDM, BR, IR, NR, SBS, SEBS, SEPS, SEEPS, MBS und Mischungen daraus, ABS sowie Blends aus ABS mit PA oder ABS und PC, BMC (Bulk-Molding-Compound) oder SMC (Sheet-Molding-Compound) auf UP(ungesättigtes Polyester)-Harz- oder Vinylester-Harz-Basis als Prepreg und/oder ausgehärtetes Material, das noch olefinisch ungesättigte Doppelbindungen an der Oberfläche besitzt, oder auf Epoxidharz-Basis als Prepreg und/oder ausgehärtetes Material, wobei die Oberfläche nachträglich modifiziert Gruppen mit olefinisch ungesättigten Doppelbindungen besitzt, vorhanden sind.

3. Modifizierte Formteile und oder Bauteile aus Kunststoffen nach Anspruch 1, bei denen modifizierte Perfluorpolymer-(Mikro-)Pulver vorhanden sind, die mittels strahlenchemischer und/oder plasmachemischer Behandlung modifiziert sind.

4. Modifizierte Formteile und oder Bauteile aus Kunststoffen nach Anspruch 1, bei denen als modifizierte Perfluorpolymer-(Mikro-)Pulver modifiziertes PTFE und/oder PFA und/oder FEP, vorteilhafterweise mittels strahlenchemischer und/oder plasmachemischer Behandlung modifiziertes PTFE und/oder PFA und/oder FEP vorhanden sind.

5. Verfahren zur Herstellung von mit Perfluorpolymer-(Mikro-)Pulvern modifizierten Formteilen und/oder Bauteilen aus Kunststoffen, bei dem modifizierte Perfluorpolymer-(Mikro-)Pulver mit einer Perfluorpolymer-(peroxy-)Radikal-Konzentration von > 5 ·10¹⁶ Spin/g_{Perfluorpolymer} auf eine feste Oberfläche von Kunststoffen, die olefinisch ungesättigte Doppelbindungen mindestens an der Oberfläche aufweisen, bei Raumtemperatur die Oberfläche vollständig bedeckend aufgebracht werden und während und/oder nach dem Aufbringen der modifizierten Perfluorpolymer-(Mikro-)Pulver unter mechanischer Beanspruchung eine reaktive Umsetzung durchgeführt wird, wobei eine nachfolgende Temperung der Kunststoffe mit den modifizierten Perfluorpolymer-(Mikro-)Pulvern ausgeschlossen ist.

6. Verfahren nach Anspruch 5, bei dem als modifizierte Perfluorpolymer-(Mikro-)Pulver modifiziertes PTFE- und/oder PFA- und/oder FEP-(Mikro-)Pulver, vorteilhafterweise mittels strahlenchemischer und/oder plasmachemischer Behandlung modifiziertes PTFE- und/oder PFA- und/oder FEP-(Mikro-)Pulver, eingesetzt wird.

7. Verfahren nach Anspruch 5, bei dem strahlenchemisch modifizierte Perfluorpolymer-(Mikro-)Pulver eingesetzt werden, welche mit einer Strahlendosis von > 50 kGy und vorzugsweise ≥ 100 kGy modifiziert sind und eine Konzentration > 10¹⁸ Spin/g_{Perfluorpolymer} an Perfluorpolymer-(peroxy-)Radikalen aufweisen.

8. Verfahren nach Anspruch 5, bei dem modifizierte Perfluorpolymer-(Mikro-)Pulver eingesetzt werden, die in Gegenwart von Reaktanten und vorzugsweise unter Sauerstoffeinfluss strahlenchemisch modifiziert sind.

9. Verfahren nach Anspruch 5, bei dem als Kunststoffe Form- und/oder Bauteile aus Polymeren mit Gruppen mit olefinisch ungesättigten Doppelbindungen in der Seitenkette und/oder in der Hauptkette mindestens an der Oberfläche eingesetzt und modifiziert werden, wobei als Polymere mit olefinisch ungesättigten Doppelbindungen Elastomere/Gummi oder Kautschuk vor der Vulkanisation oder thermoplastische Elastomere oder Thermoplaste oder Duromere, jeweils an der Oberfläche, eingesetzt werden, und wobei als Polymere SBR, NBR, HNBR, XNBR, EPDM, BR, IR, NR, SBS, SEBS, SEPS, SEEPS, MBS und Mischungen daraus, ABS sowie Blends aus ABS mit PA oder ABS und PC, BMC (Bulk-Molding-Compound) oder SMC (Sheet-Molding-Compound) auf UP(ungesättigtes Polyester)-Harz- oder Vinylester-Harz-Basis als Prepreg und/oder ausgehärtetes Material, das noch olefinisch ungesättigte Doppelbindungen an der Oberfläche besitzt, oder auf Epoxidharz-Basis als Prepreg und/oder ausgehärtetes Material, wobei die Oberfläche nachträglich modifiziert Gruppen mit olefinisch ungesättigten Doppelbindungen besitzt, eingesetzt werden.

10. Verfahren nach Anspruch 5, bei dem bei Raumtemperatur, d.h. bei 18 bis 25 °C die modifizierten Perfluorpolymer-(Mikro-)Pulver auf die Kunststoffoberfläche aufgebracht werden.

11. Verfahren nach Anspruch 5, bei dem modifizierte Perfluorpolymer-(Mikro-)Pulver auf eine feste Kunststoff-Oberfläche, die eine Temperatur bis 200 °C, vorzugsweise 150 °C aufweist, aufgebracht werden.

12. Verfahren nach Anspruch 5, bei dem die reaktive Umsetzung unter mechanischer Beanspruchung
- durch Druckbeanspruchung, wie Reiben und/oder Bürsten und/oder Ultraschall ohne oder mit Trägerkörpern aus Metall und/oder Keramik und/oder Kunststoff und/oder
- durch Beanspruchung durch beschleunigte Trägerkörper aus Metall und/oder Keramik und/oder Kunststoff,
realisiert wird,
wobei die mechanische Beanspruchung während und/oder nach dem Aufbringen der strahlenchemisch und/oder plasmachemisch modifizierten Perfluorpolymer-(Mikro- )Pulver auf die feste Kunststoff-Oberfläche realisiert wird.

13. Verfahren nach Anspruch 5, bei dem das Aufbringen der modifizierten Perfluorpolymer-(Mikro-)Pulver vor der reaktiven Umsetzung unter mechanischen Beanspruchung realisiert und das modifizierte Perfluorpolymer-(Mikro-)Pulver durch elektrostatische Adsorption auf der festen Kunststoff-Oberfläche positioniert wird.

## Claims

1. Plastics modified with perfluoropolymers, in which the olefinically unsaturated double bonds present on the surface of shaped articles and/or components made of plastics are chemically covalently bonded to the perfluoropolymer (peroxy) radicals of modified perfluoropolymer (micro)powders after a reactive conversion under mechanical stress at room temperature via free-radical coupling, wherein the respective surface of the shaped plastic articles and/or plastic components is fully covered with perfluoropolymer (micro)powder.

2. Modified shaped articles and/or components made of plastics according to Claim 1, in which plastics in the shaped articles and/or components that are present at the surface are polymers having groups having olefinically unsaturated double bonds in the side chain and/or in the main chain, where polymers having olefinically unsaturated double bonds that are respectively present at the surface are elastomers/vulcanized rubber or rubber prior to vulcanization or thermoplastic elastomers or thermoplastics or thermosets, and where polymers present are SBR, NBR, HNBR, XNBR, EPDM, BR, IR, NR, SBS, SEBS, SEPS, SEEPS, MBS and mixtures thereof, ABS and blends of ABS with PA or ABS and PC, BMC (bulk moulding compounds) or SMC (sheet moulding compounds) based on UP (unsaturated polyester) resin or vinyl ester resin as prepreg and/or cured material that still has olefinically unsaturated double bonds at the surface, or based on epoxy resin as prepreg and/or cured material, where the surface has groups with olefinically unsaturated double bonds in subsequently modified form.

3. Modified shaped articles and/or components made of plastics according to Claim 1, in which modified perfluoropolymer (micro)powders are present, these having been modified by radiochemical and/or plasma-chemical treatment.

4. Modified shaped articles and/or components made of plastics according to Claim 1, in which the modified perfluoropolymer (micro)powders present are modified PTFE and/or PFA and/or FEP, advantageously PTFE and/or PFA and/or FEP modified by radiochemical and/or plasma-chemical treatment.

5. Process for producing shaped articles and/or components that are made of plastics and have been modified with perfluoropolymer (micro)powders, in which modified perfluoropolymer (micro)powders having a perfluoropolymer (peroxy) radical concentration of > 5 · 10¹⁶ spins/g_{perfluoropolymer} are applied to a solid surface of plastics having olefinically unsaturated double bonds at least at the surface at room temperature so as to fully cover the surface and, during and/or after the application of the modified perfluoropolymer (micro)powders, a reactive conversion is conducted under mechanical stress, with exclusion of subsequent tempering of the plastics with the modified perfluoropolymer (micro)powders.

6. Process according to Claim 5, in which modified perfluoropolymer (micro)powders used are modified PTFE and/or PFA and/or FEP (micro)powders, advantageously PTFE and/or PFA and/or FEP (micro)powders modified by radiochemical and/or plasma-chemical treatment.

7. Process according to Claim 5, in which radiochemically modified perfluoropolymer (micro)powders are used, having been modified with a radiation dose of > 50 kGy and preferably ≥ 100 kGy and having a concentration > 10¹⁸ spins/g_{perfluoropolymer} of perfluoropolymer (peroxy) radicals.

8. Process according to Claim 5, in which modified perfluoropolymer (micro)powders are used, having been radiochemically modified in the presence of reactants and preferably under the influence of oxygen.

9. Process according to Claim 5, in which the plastics used at least at the surface and modified are shaped articles and/or components made of polymers having groups having olefinically unsaturated double bonds in the side chain and/or in the main chain, where the polymers having olefinically unsaturated double bonds that are respectively used at the surface are elastomers/vulcanized rubber or rubber prior to vulcanization or thermoplastic elastomers or thermoplastics or thermosets, and where the polymers used are SBR, NBR, HNBR, XNBR, EPDM, BR, IR, NR, SBS, SEBS, SEPS, SEEPS, MBS and mixtures thereof, ABS and blends of ABS with PA or ABS and PC, BMC (bulk moulding compounds) or SMC (sheet moulding compounds) based on UP (unsaturated polyester) resin or vinyl ester resin as prepreg and/or cured material that still has olefinically unsaturated double bonds at the surface, or based on epoxy resin as prepreg and/or cured material, where the surface has groups with olefinically unsaturated double bonds in subsequently modified form.

10. Process according to Claim 5, in which the modified perfluoropolymer (micro)powders are applied to the plastic surface at room temperature, i.e. at 18 to 25°C.

11. Process according to Claim 5, in which modified perfluoropolymer (micro)powders are applied to a solid plastic surface having a temperature of up to 200°C, preferably 150°C.

12. Process according to Claim 5, in which the reactive conversion under mechanical stress is implemented
- by pressurization, such as rubbing and/or brushing and/or ultrasound, without or with carrier bodies made of metal and/or ceramic and/or plastic
and/or
- by stress by means of accelerated carrier bodies made of metal and/or ceramic and/or plastic,
wherein the mechanical stress is implemented during and/or after the application of the radiochemically and/or plasma-chemically modified perfluoropolymer (micro)powders to the solid plastic surface.

13. Process according to Claim 5, in which the application of the modified perfluoropolymer (micro)powders is implemented prior to the reactive conversion under mechanical stress and the modified perfluoropolymer (micro)powder is positioned on the solid plastic surface by electrostatic adsorption.

## Revendications

1. Plastiques modifiés par des polymères perfluorés, dans lesquels les doubles liaisons oléfiniquement insaturées se trouvant à la surface de pièces moulées et/ou de composants en plastique se trouvent par l'intermédiaire d'un couplage radicalaire sous une forme chimiquement liée par covalence avec les radicaux (peroxy) de polymères perfluorés de (micro)poudres de polymères perfluorés modifiés, après transformation réactive sous une sollicitation mécanique à température ambiante, la surface respective des pièces moulées et/ou des composants en plastique étant complètement recouverte par de la (micro)poudre de polymères perfluorés.

2. Pièces moulées et/ou composants modifié(e)s en plastique selon la revendication 1, dans lesquel(le)s sont présents, en tant que plastique des pièces moulées et/ou composants, des polymères présentant des groupes comprenant des doubles liaisons oléfiniquement insaturées dans la chaîne latérale et/ou dans la chaîne principale à la surface, dans lesquel(le)s sont présents, en tant que polymères présentant des doubles liaisons oléfiniquement insaturées, des élastomères/gommes ou du caoutchouc avant la vulcanisation ou des élastomères thermoplastiques ou des thermoplastiques ou des thermodurcissables, à chaque fois à la surface et dans lesquel(le)s sont présents, en tant que polymères, du SBR, du NBR, du HNBR, du XNBR, de l'EPDM, du BR, de l'IR, du NR, du SBS, du SEBS, du SEPS, du SEEPS, du MBS et leurs mélanges, de l'ABS ainsi que des mélanges d'ABS avec du PA ou d'ABS et de PC, du BMC (Bulk-Molding-Compound) ou du SMC (Sheet-Molding-Compound) à base de résine d'UP (polyester insaturé) ou de résine d'ester de vinyle en tant que préimprégné et/ou matériau durci, qui possède encore des doubles liaisons oléfiniquement insaturées à la surface ou à base de résine époxyde en tant que préimprégné et/ou matériau durci, la surface possédant des groupes modifiés ultérieurement comprenant des doubles liaisons oléfiniquement insaturées.

3. Pièces moulées et/ou composants modifié(e)s en plastique selon la revendication 1, dans lesquel(le)s sont présentes des (micro)poudres de polymères perfluorés modifiés, qui sont modifiés par traitement par chimie de rayonnement et/ou chimie plasmatique.

4. Pièces moulées et/ou composants modifié(e)s en plastique selon la revendication 1, dans lesquel(le)s sont présents, en tant que (micro)poudres de polymères perfluorés modifiés, du PFTE et/ou du PFA et/ou du FEP modifié(s), avantageusement du PFTE et/ou du PFA et/ou du FEP modifié(s) par traitement par chimie de rayonnement et/ou par chimie plasmatique.

5. Procédé de préparation de pièces moulées et/ou de composants en plastique, modifié(e)s par des (micro)poudres de polymères perfluorés, dans lequel des (micro)poudres de polymères perfluorés modifiés présentant une concentration en radicaux (peroxy) de polymères perfluorés > 5 * 10¹⁶ spins/g_{polymère perfluoré} sont appliquées sur une surface solide de plastiques, qui présentent des doubles liaisons oléfiniquement insaturées au moins au niveau de la surface, à température ambiante, de manière à recouvrir complètement la surface et, pendant et/ou après l'application des (micro)poudres de polymères perfluorés modifiés, une transformation réactive est réalisée sous sollicitation mécanique, un traitement thermique consécutif des plastiques présentant les (micro)poudres de polymères perfluorés modifiés étant exclu.

6. Procédé selon la revendication 5, dans lequel on utilise, en tant que (micro)poudres de polymères perfluorés modifiés, une (micro)poudre de PTFE modifié et/ou de PFA modifié et/ou de FEP modifié, avantageusement une (micro)poudre de PTFE modifié et/ou de PFA modifié et/ou de FEP modifié au moyen d'un traitement par chimie de rayonnement et/ou chimie plasmatique.

7. Procédé selon la revendication 5, dans lequel on utilise des (micro)poudres de polymères perfluorés modifiés par chimie de rayonnement, qui sont modifiés par une dose de rayonnement > 50 kGy et de préférence ≥ 100 kGy et qui présentent une concentration > 10¹⁸ spins/g_{polymère perfluoré} en radicaux (peroxy) de polymères perfluorés.

8. Procédé selon la revendication 5, dans lequel on utilise des (micro)poudres de polymères perfluorés modifiés qui sont modifiés par chimie de rayonnement en présence de réactifs et de préférence sous l'influence d'oxygène.

9. Procédé selon la revendication 5, dans lequel on utilise et on modifie, en tant que plastiques, des pièces moulées et/ou de composants en polymères présentant des groupes comprenant des doubles liaisons oléfiniquement insaturées dans la chaîne latérale et/ou dans la chaîne principale au moins à la surface, dans lequel on utilise, en tant que polymères présentant des doubles liaisons oléfiniquement insaturées, des élastomères/gommes ou du caoutchouc avant la vulcanisation ou des élastomères thermoplastiques ou des thermoplastiques ou des thermodurcissables, à chaque fois à la surface et dans lequel on utilise, en tant que polymères, du SBR, du NBR, du HNBR, du XNBR, de l'EPDM, du BR, de l'IR, du NR, du SBS, du SEBS, du SEPS, du SEEPS, du MBS et leurs mélanges, de l'ABS ainsi que des mélanges d'ABS avec du PA ou d'ABS et de PC, du BMC (Bulk-Molding-Compound) ou du SMC (Sheet-Molding-Compound) à base de résine d'UP (polyester insaturé) ou de résine d'ester de vinyle en tant que préimprégné et/ou matériau durci, qui possède encore des doubles liaisons oléfiniquement insaturées à la surface ou à base de résine époxyde en tant que préimprégné et/ou matériau durci, la surface possédant des groupes modifiés ultérieurement comprenant des doubles liaisons oléfiniquement insaturées.

10. Procédé selon la revendication 5, dans lequel les (micro)poudres de polymères perfluorés modifiés sont appliquées sur la surface en plastique à température ambiante, c'est-à-dire à 18 jusqu'à 25°C.

11. Procédé selon la revendication 5, dans lequel des (micro)poudres de polymères perfluorés modifiés sont appliquées sur une surface solide en plastique, qui présente une température jusqu'à 200°C, de préférence 150°C.

12. Procédé selon la revendication 5, dans lequel la transformation réactive sous sollicitation mécanique est réalisée
- par sollicitation par la pression, telle que le frottement et/ou le brossage et/ou les ultrasons, avec ou sans corps supports en métal et/ou en céramique et/ou en plastique et/ou
- par sollicitation par des corps supports accélérés en métal et/ou en céramique et/ou en plastique,
la sollicitation mécanique étant réalisée pendant et/ou après l'application des (micro)poudres en polymères perfluorés modifiés par chimie de rayonnement et/ou chimie plasmatique sur la surface solide en plastique.

13. Procédé selon la revendication 5, dans lequel l'application des (micro)poudres de polymères perfluorés modifiés est réalisée avant la transformation réactive sous sollicitation mécanique et la (micro)poudre de polymères perfluorés modifiés est positionnée sur la surface solide en plastique par adsorption électrostatique.
